# EUROPÄISCHE PATENTSCHRIFT

(11) **EP 2 826 959 B1**
(45) Veröffentlichungstag und Bekanntmachung des Hinweises auf die Patenterteilung: **05.09.2018**
(21) Anmeldenummer: 14176727.7
(22) Anmeldetag: 11.07.2014
(51) Int. Cl.: F01D 5/28, F01D 9/02, F01D 9/04, F01D 25/00, F01D 25/14, F01D 25/24, F01D 11/00

(54) **Isolationselement für ein Gehäuse eines Flugtriebwerks**
Insulating element for a casing of an aircraft engine
Élément d'isolation pour un carter d'un moteur d'avion

(30) Priorität: 15.07.2013 DE 102013213834
(43) Veröffentlichungstag der Anmeldung: 21.01.2015
(73) Patentinhaber: MTU Aero Engines AG, 80995 München (DE)
(72) Erfinder: Bayer, Erwin, 85221 Dachau (DE); Heß, Thomas, 81541 München (DE); Hiller, Sven-Jürgen, 85253 Erdweg (DE); Geiger, Peter, 80997 München (DE)

(56) Entgegenhaltungen:
- EP-A1- 0 522 833
- DE-T2- 69 408 423
- FR-A1- 2 957 115
- GB-A- 2 115 487
- US-A- 5 074 749
- US-B1- 8 157 507

## Beschreibung

Die Erfindung betrifft ein ein Isolationselement für ein Gehäuse eines Flugtriebwerks sowie ein Flugtriebwerk mit einem Gehäuse, in welchem wenigstens ein solches Isolationselement radial oberhalb einer Leitschaufel angeordnet ist.

In Turbinen von Turbomaschinen wie beispielsweise Flugtriebwerken oder stationären Gasturbinen herrschen während des Betriebs im Turbinenbereich insbesondere im Ringraum sehr hohe Temperaturen, bei denen die Festigkeitseigenschaften der üblicherweise verwendeten Werkstoffe stark reduziert werden. Dies betrifft vor allem die Gehäuse von Niederdruckturbinen. Um die Temperaturen im Bereich des Gehäuses, das auch tragende Aufgaben übernehmen muss, während des Betriebs der zugeordneten Turbomaschine auf einen vertretbaren Bereich zu beschränken, sind verschiedene Maßnahmen bekannt. Beispielsweise wird versucht, das Gehäuse durch Zufuhr von Sekundärkühlluft innerlich zu kühlen. Der Nachteil dieser Lösung besteht im hohen Sekundärluftverbrauch, der dem Kreisprozess entzogen werden muss und damit den Gesamtwirkungsgrad des Triebwerks reduziert.

Eine weitere Möglichkeit besteht in der Beaufschlagung mit Kühlluft von außen, beispielsweise mit einer sogenannten "Active Clearance Control" (ACC, "Kaltluftdusche"), die das Ausdehnungsverhalten des Gehäuses und damit die Radialspalte steuert und die Materialtemperatur des Gehäuses reduziert. Als Nachteile sind hier ebenfalls der Sekundärluftverbrauch, aber auch die vergleichsweise geringe Beeinflussbarkeit der effektiven Materialtemperatur sowie das Mehrgewicht für die ACC und die benötigten Rohrleitungen zu nennen.

Üblicherweise werden Isolationselemente zwischen Leitschaufeln und dem Gehäuse angeordnet, um eine Reduzierung der Materialtemperatur am Gehäuse sicherzustellen. Diese Isolationselemente bestehen in der Regel aus einem dünnen Blechmantel, der mit aufquellendem Isolationsmaterial (beispielsweise Mineralstoff) gefüllt ist. Beispielsweise offenbart die EP 0 643 208 A1 eine Wärmedämmanordnung, bei welcher ein Isolationselement aus einer verformbaren Metallfolie verwendet wird, die mit einem Wärmedämmmaterial aus einer Verbundstoffmischung befüllt ist, die bei Erwärmung ihr Volumen um bis zu 300% seiner Ausgangsdicke vergrößert, so dass das Isolationselement vollständig an den Innenwänden eines zugeordneten Hohlraums des Gehäuses anliegt.

Durch die Gestaltung mit einem dünnen Blechmantel sind der Formgebung des Isolationselements allerdings enge Grenzen gesetzt, wodurch in manchen Fällen keine optimale Isolationswirkung gegeben ist. Darüber hinaus besitzt das Isolationselement durch die erheblichen Volumenänderungen eine vergleichsweise geringere Lebenserwartung.

Aus der FR 2 957 115 A1 ist ein Isolationselement gemäß dem Oberbegriff des Anspruchs 1 offenbart. Ferner wird der Vollständigkeit halber auch auf die EP 0 522 833 A1 verwiesen.

Aufgabe der vorliegenden Erfindung ist es, ein Isolationselement mit einer verbesserten Isolationswirkung und einer höhere Lebenserwartung bereitzustellen. Weitere Aufgabe der Erfindung ist die Bereitstellung eines Flugtriebwerks mit einem derartig verbesserten Isolationselement.

Die Aufgaben der Erfindung werden durch ein Isolationselement mit den Merkmalen des Anspruchs 1 sowie durch ein Flugtriebwerk mit den Merkmalen des Anspruchs 5 gelöst. Vorteilhafte Ausgestaltungen mit zweckmäßigen Weiterbildungen der Erfindung sind in den jeweiligen Unteransprüchen angegeben.

Vorgeschlagen wird ein Verfahren zum Herstellen eines Isolationselements, welches radial oberhalb wenigstens einer Leitschaufel in einem Gehäuse einer thermischen Gasturbine anordenbar ist. Dabei ist es vorgesehen, dass das Isolationselement aus einem mit einer metallischen Hülle versehenen Festkörper hergestellt wird, wobei der Festkörper zumindest teilweise aus einem keramischen Material besteht. Mit anderen Worten ist es vorgesehen, dass anstelle einer mit einem aufblähbaren Material gefüllten Metallfolie ein Festkörper als Isolationselement verwendet wird, wobei der Festkörper von einer metallischen Hülle umgeben ist und zumindest teilweise aus einem keramischen Material besteht. Aufgrund der zumindest teilweisen Verwendung von keramischem Material bzw. von unterschiedlichen keramischen Materialien weist der Festkörper auch bei hohen Temperaturen, beispielsweise bei Temperaturen zwischen 900°C und 1600°C, zumindest annähernd keine bzw, nur eine äußerst geringe Volumenänderung von maximal ±10 % auf. Beispielsweise kann der Festkörper grundsätzlich einen Gewichtsanteil von 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 % oder 100 % an keramischem Material bzw. an unterschiedlichen keramischen Materialien aufweisen. Durch die geometrisch freie Ausgestaltbarkeit des keramischen Festkörpers und aufgrund der Tatsache, dass dieser bei Temperaturschwankungen keine bzw. nur sehr geringe Volumenänderungen erfährt, kann das Isolationselement optimal an den jeweiligen Einsatzzweck und die dort vorherrschenden Gegebenheiten angepasst werden, wodurch eine entsprechend hohe und zuverlässige Isolationswirkung erzielt wird. Darüber hinaus besitzt das hergestellte Isolationselement eine besonders hohe Lebenserwartung, da es auch bei hohen Temperaturschwankungen keinen wesentlichen Volumenschwankungen unterworfen ist.

In einer vorteilhaften Ausgestaltung ist vorgesehen, dass zunächst der Festkörper aus dem wenigstens einen keramischen Material hergestellt und anschließend mit der metallischen Hülle umschlossen wird. Hierdurch können unterschiedliche Herstellungsverfahren für den zumindest teilweise keramisch ausgebildeten Festkörper und die metallische Hülle verwendet werden, wodurch eine optimale Anpassbarkeit des Verfahrens an unterschiedliche materialspezifische Anforderungen gegeben ist. Dabei kann beispielsweise vorgesehen sein, dass der als Isolationskörper dienende Festkörper aus einem keramischen Material hergestellt und gegebenenfalls gesintert wird, wonach die metallische Hülle beispielsweise generativ oder durch ein Beschichtungsverfahren auf den Festkörper aufgebracht wird.

Weitere Vorteile ergeben sich, wenn zunächst ein Teil der metallischen Hülle bereitgestellt, mit dem wenigstens einen keramischen Material befüllt und nach der Ausbildung des Festkörpers aus dem wenigstens einen keramischen Material vervollständigt wird. Mit anderen Worten ist es vorgesehen, dass zunächst ein Teil der metallischen Hülle hergestellt und mit dem keramischen Material befüllt wird, aus dem der Festkörper entstehen soll bzw. entsteht.

Beispielsweise kann als keramisches Isolationsmaterial in "loser" Form (z. B. einzelne Keramikkugeln) in die Teilhülle eingefüllt werden. Weiterhin kann vorgesehen sein, dass die metallische Teilhülle ausgeschäumt, mit einem keramischen Pulver und/oder mit weiteren geeigneten Materialien befüllt wird. Anschließend wird die metallische Hülle vervollständigt, das heißt das in der Teilhülle eingefüllte Material wird vollständig mit dem metallischen Material umhüllt. Je nach verwendetem keramischem Material kann bedarfsweise vor und/oder nach dem Vervollständigen der metallischen Hülle grundsätzlich auch ein Sinterschritt oder ähnliches vorgesehen sein, um den von der metallischen Hülle eingeschlossenen Festkörper auszubilden.

In einer weiteren vorteilhaften Ausgestaltung ist vorgesehen, dass der Festkörper zumindest teilweise aus einem Keramikschaum und/oder aus Keramikkörpern, insbesondere Keramikkugeln, und/oder aus Keramikpulver und/oder aus Keramikfolien und/oder durch Sintern und/oder durch stoffschlüssiges Verbinden von Keramikpartikeln hergestellt wird. Hierdurch kann der Festkörper besonders flexibel hergestellt und optimal an die jeweiligen geometrischen und thermischen Gegebenheiten im zugeordneten Triebwerk angepasst werden. Beispielsweise können zum Herstellen des Festkörpers einzelne Keramikkörper, beispielsweise Keramikkugeln, bereitgestellt und miteinander verklebt werden. Alternativ oder zusätzlich kann der Festkörper aus einem Keramikschaum und/oder aus keramischem Pulver hergestellt werden, wobei zumindest das keramische Pulver versintert oder anderweitig stoffschlüssig zum Festkörper gefügt wird. Alternativ oder zusätzlich können keramische Körper durch keramisches (Nano-)Keramik-Pulver mit reduzierter Sintertemperatur (z. B. ca. 800°C) zu einem Festkörper versintert werden. Als weitere Alternative bietet sich die Verwendung eines Bindematerials, beispielsweise einer metallorganischen Verbindung (Lack), an, bei der der organische Rest ausgebrannt wird und über das Metall eine stoffschlüssige Verbindung erzielt wird. Ebenso kann vorgesehen sein, dass der Festkörper zumindest teilweise aus Keramikfolien hergestellt wird. Hierbei wird ein sogenannter Grünkörper aus mehreren Lagen gleicher oder unterschiedlicher Keramikfolien hergestellt. Dieser Grünkörper wird dann bei geeigneten Temperaturen, beispielsweise bei Temperaturen zwischen 800°C und 1000°C für so genannte Niedertemperatur-Einbrand-Keramikmaterialien (Low Temperature Cofired Ceramics; LTCC) oder bei Temperaturen zwischen etwa 1500°C und etwa 1800°C für so genannte Hochtemperatur-Einbrand-Keramikmaterialien (High Temperature Cofired Ceramics; HTCC), gesintert.

Die zum Formen des Grünkörpers verwendeten Keramikfolien können beispielsweise durch Foliengießen einer keramischen Grünfolie auf einem Träger hergestellt werden. Hierbei wird der Träger anschließend von der keramischen Grünfolie abgezogen, wodurch eine ungesinterte Keramikfolie erhalten wird. Die Keramikfolien können vor und/oder nach dem Stapeln weiter bearbeitet, beispielsweise getrennt werden. Dies bietet den Vorteil, dass der Festkörper nahezu beliebige Geometrien einschließlich Hinterschnitte und dergleichen aufweisen kann. Darüber hinaus kann beispielsweise durch die Kombination unterschiedlicher Keramikfolien eine besonders gut angepasste Isolationswirkung erzielt werden. Darüber hinaus ist es auch möglich, weitere, gegebenenfalls nicht-keramische Materialien, Fäden, Gewebe und dergleichen zwischen den einzelnen Keramikfolien anzuordnen.

In einer weiteren vorteilhaften Ausgestaltung ist vorgesehen, dass das wenigstens eine keramische Material mit einem organischen und/oder metallorganischen und/oder metallischen und/oder keramischen Bindemittel versehen wird. Dies erleichtert die Herstellung des Festkörpers aus körnigem oder stückigem Material.

Weitere Vorteile ergeben sich, wenn die metallische Hülle zumindest teilweise generativ, insbesondere durch wenigstens ein Verfahren aus der Gruppe Pulverauftragsschweißen und Schmelzschichtung, und/oder durch ein Beschichtungsverfahren, insbesondere durch thermisches Spritzen, und/oder durch Urformen hergestellt wird. Dies erlaubt eine besonders flexible Ummantelung des Festkörpers und damit eine entsprechend flexible Herstellung des Isolationselements. Insbesondere durch einen generativen Aufbau der metallischen Hülle hat man gegenüber der konventionellen Bauweise mehr Gestaltungsfreiheiten, da auch Überlappungen, Hinterschnitte und dergleichen herstellbar sind. Beispielsweise können hierdurch Isolationselement mit überlappenden Segmentstoßstellen und/oder mit Strukturen an den Segmentstoßstellen hergestellt werden, die sich so verformen, dass sie im Betrieb gasdicht an anderen Bauteilen anliegen. Weiterhin ist es möglich, Isolationselemente mit Bauteilbereichen herzustellen, die einen temperaturabhängigen Bimetalleffekt zeigen. Mit anderen Worten können auxetische Strukturen mit sich thermisch einseitig verformenden Bereichen hergestellt werden.

Die Erfindung betrifft ein Isolationselement, welches radial oberhalb wenigstens einer Leitschaufel in einem Gehäuse einer thermischen Gasturbine anordenbar ist. Dabei ist es erfindungsgemäß vorgesehen, dass das Isolationselement aus einem mit einer metallischen Hülle versehenen Festkörper besteht, wobei der Festkörper zumindest teilweise aus einem keramischen Material besteht. Hierdurch weist das erfindungsgemäße Isolationselement eine verbesserte Isolationswirkung und eine höhere Lebenserwartung auf. Weitere Merkmale und deren Vorteile sind den vorherigen Beschreibungen des Herstellverfahrens zu entnehmen, wobei vorteilhafte Ausgestaltungen des Herstellverfahrens als vorteilhafte Ausgestaltungen des Isolationselements anzusehen sind.

In einer vorteilhaften Ausgestaltung der Erfindung ist das Isolationselement segmentförmig, insbesondere ringsegmentförmig ausgebildet. Dies erlaubt eine besonders einfache und gasdichte Auskleidung eines Gehäuses einer thermischen Gasturbine. Darüber hinaus werden durch eine segmentartige Ausgestaltung auch die Wartung, Überholung und Reparatur des Isolationselements erleichtert.

Weitere Vorteile ergeben sich, indem das Isolationselement einander gegenüberliegende und komplementär ausgebildete Segmentstoßbereiche zur vorzugsweise ringförmigen Anordnung weiterer Isolationselemente aufweist. Mit anderen Worten weist das Isolationselement gegenüberliegende Anbindungsbereiche zur Anlage weiterer Isolationselemente auf, wobei die aneinander anzulegenden Anbindungsbereiche komplementär und vorzugsweise vertauschsicher (foolproof) ausgebildet sind, um eine fehlerhafte Montage einzelner Segmente zu verhindern.

Erfindungsgemäß umfasst das Isolationselement wenigstens ein Dichtelement zur Anordnung in einer korrespondierenden Aufnahme eines benachbarten Isolationselements, wobei das Dichtelement derart ausgebildet ist, dass es sich bei thermischer Belastung reversibel und/oder anisotrop verformt. Hierdurch werden während des Betriebs eines zugeordneten Triebwerks eine besonders hohe Gasdichtigkeit zwischen angrenzenden Isolationselementen und damit eine besonders gute Isolationswirkung sowie ein vorteilhaft erhöhter Wirkungsgrad des Triebwerks sichergestellt. Das Dichtelement kann beispielsweise derart ausgebildet sein, dass es einen thermischen Bimetalleffekt zeigt. Alternativ oder zusätzlich kann das Dichtelement eine auxetische Struktur aufweisen und sich thermisch einseitig verformen.

Weitere Vorteile ergeben sich, indem der Festkörper und/oder die metallischen Hülle Bereiche aufweist bzw. aufweisen, welche zumindest im montierten Zustand des Isolationselements als Anlageflächen für weitere Bauteile und/oder als Montageflächen zum Anordnen des Isolationselements an einem Gehäuse und/oder als Stoßflächen zur Anlagerung weiterer Isolationselemente fungieren. Mit anderen Worten ist es vorzugsweise vorgesehen, dass der Festkörper und/oder die metallischen Hülle des Isolationselements bereits eine oder mehrere Funktionsflächen aus der Gruppe Anlagefläche, Montagefläche und Stoßflächen an Segmentstoßstellen aufweist. Dies erlaubt eine vereinfachte Anordnung und Montage des Isolationselements im Gehäuse und verbessert die Isolationswirkung. Darüber hinaus kann auf weitere Bauteile zur Anlage, Montage und/oder Anbindung weiterer Isolationselemente vorteilhaft verzichtet werden, wodurch entsprechende Gewichts- und Kosteneinsparungen gegeben sind.

Ein weiterer Aspekt der Erfindung betrifft ein Flugtriebwerk mit einem Gehäuse, insbesondere einem Niederdruckturbinengehäuse, in welchem wenigstens ein Isolationselement radial oberhalb wenigstens einer Leitschaufel angeordnet ist. Erfindungsgemäß ist dabei vorgesehen, dass das Isolationselement gemäß den obigen Ausführungen ausgebildet ist. Die sich hieraus ergebenden Merkmale und deren Vorteile sind den Beschreibungen des Herstellverfahrens bzw. des Isolationselements zu entnehmen.

In einer vorteilhaften Ausgestaltung der Erfindung ist vorgesehen, dass das Flugtriebwerk mehrere segmentierte Isolationselemente umfasst, die bezüglich einer Rotorachse des Flugtriebwerks ringförmig im Gehäuse gehalten sind. Dies erlaubt eine besonders einfache und gasdichte Auskleidung des Gehäuses des Flugtriebwerks. Darüber hinaus werden durch eine segmentartige Ausgestaltung auch die Wartung, Überholung und Reparatur des Gehäuses und der Isolationselemente erleichtert.

Weitere Vorteile ergeben sich, wenn die Isolationselemente miteinander korrespondierende Segmentstoßbereiche aufweisen, wobei jeder Segmentstoßbereich zumindest bereichsweise mit dem jeweils angrenzenden Segmentstoßbereich des benachbarten Isolationselements überlappt. Hierdurch wird einerseits eine mechanisch besonders stabile Anbindung erzielt und andererseits eine Art Labyrinthdichtung gebildet, wodurch die Isolationswirkung und Gasdichtigkeit weiter verbessert werden. Alternativ oder zusätzlich kann vorgesehen sein, dass die Isolationselemente jeweils zwei einander gegenüberliegende Segmentstoßbereiche aufweisen, von denen jeweils ein Segmentstoßbereich ein Dichtelement aufweist, das sich in eine Aufnahme des benachbarten Isolationselements erstreckt und sich zumindest während des Betriebs des Flugtriebwerks derart verformt, dass ein Gasdurchtritt zwischen benachbarten Segmentstoßbereichen zumindest weitgehend verringert wird. Hierdurch wird neben einer hohen Isolationswirkung auch eine gute Dichtigkeit an den Segmentstoßstellen erzielt.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: einen schematischen seitlichen Ausschnitt eines Gehäuses für ein Flugtriebwerk, wobei im Gehäuse ein Isolationselement radial oberhalb einer Leitschaufel angeordnet ist;
- Fig. 2: eine schematische seitliche Schnittansicht eines Festkörpers zu Beginn seiner Herstellung;
- Fig. 3: eine schematische seitliche Schnittansicht des fertigen Festkörpers des Isolationselements;
- Fig. 4: eine schematische seitliche Schnittansicht des Festkörpers während seiner Umhüllung mit einer metallischen Hülle;
- Fig. 5: eine schematische seitliche Schnittansicht des fertigen Isolationselements;
- Fig. 6: eine Prinzipdarstellung eines alternativen Herstellungsverfahrens des Isolationselements, bei der vier aufeinander folgende Herstellungsphasen dargestellt sind;
- Fig. 7: eine schematische seitliche Schnittansicht von zwei segmentförmigen Isolationselementen;
- Fig. 8 bis 10: schematische seitliche Schnittansichten unterschiedlicher Ausführungsformen von aneinander anliegenden Segmentstoßbereichen zweier Isolationselemente; und
- Fig. 11: eine schematische seitliche Schnittansicht eines sich reversibel verformenden Dichtelements.

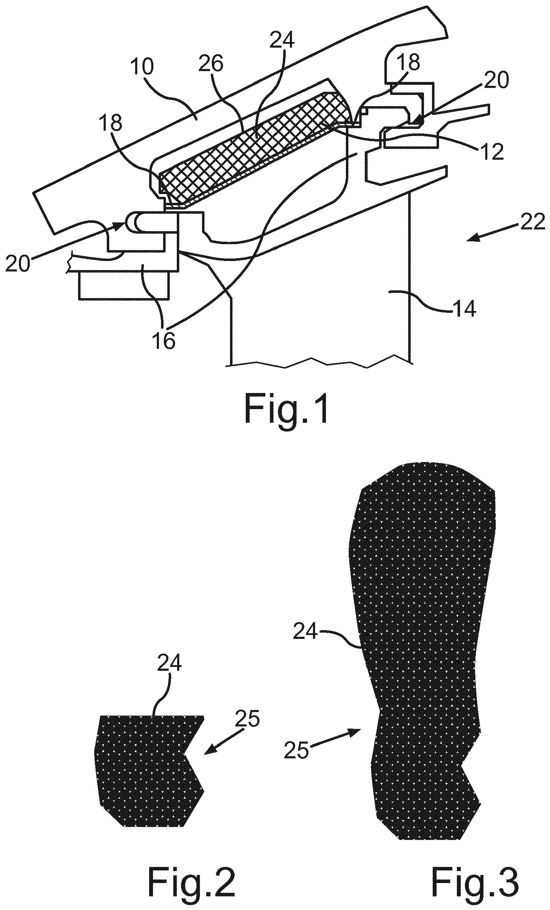

Fig. 1 zeigt einen schematischen seitlichen Ausschnitt eines Gehäuses 10 für ein Flugtriebwerk (nicht dargestellt). In Turbinen von Flugtriebwerken, Turbomaschinen, stationären Gasturbinen und dergleichen herrschen insbesondere im Ringraum 22 des Turbinenbereichs sehr hohe Temperaturen, bei denen die Festigkeitseigenschaften der verwendeten Werkstoffe stark reduziert werden. Dies betrifft unter anderem auch das gezeigte Gehäuse 10 einer Niederdruckturbine. Zur Verbesserung der Isolationswirkung ist ein Isolationselement 12 bezüglich einer Drehachse eines nicht dargestellten Rotors radial oberhalb einer Leitschaufel 14 im Gehäuse 10 angeordnet. Die Leitschaufel 14 ist über Haken 16 derart am Gehäuse 10 gehalten, dass das Isolationselement 12 über seine integral ausgebildeten Montageflächen 18 ebenfalls in den entsprechenden Aufnahmen 20 des Gehäuses lagegesichert ist. Das Isolationselement 12 verbessert im Betrieb des Flugtriebwerks die Isolation zwischen der Leitschaufel 14 und dem Gehäuse 10 und bewirkt eine Reduktion der Materialtemperatur am Gehäuse 10. Da das Isolationselement 12 weiterhin am Gehäuse 10 anliegt, werden unerwünschte Leckagen während des Betriebs des Flugtriebwerks vollständig oder zumindest weitgehend vermieden. Aufgrund der zumindest im Wesentlichen leckagefreien Anbindung verbessert das Isolationselement 12 auch den Wirkungsgrad des Flugtriebwerks. Es ist aber zu betonen, dass das Isolationselement 12 grundsätzlich auch in anderen Gehäusebereichen, beispielsweise im Bereich von Laufschaufeln verwendet werden kann.

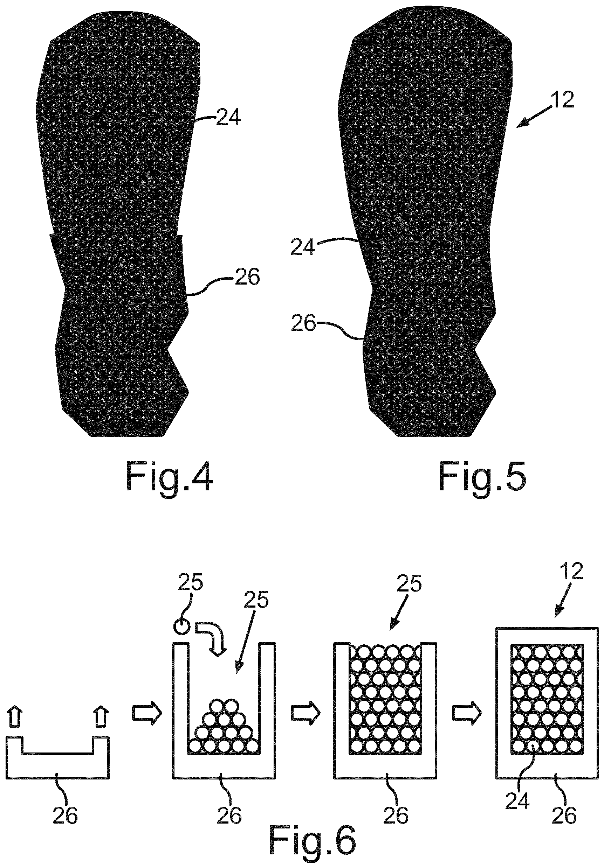

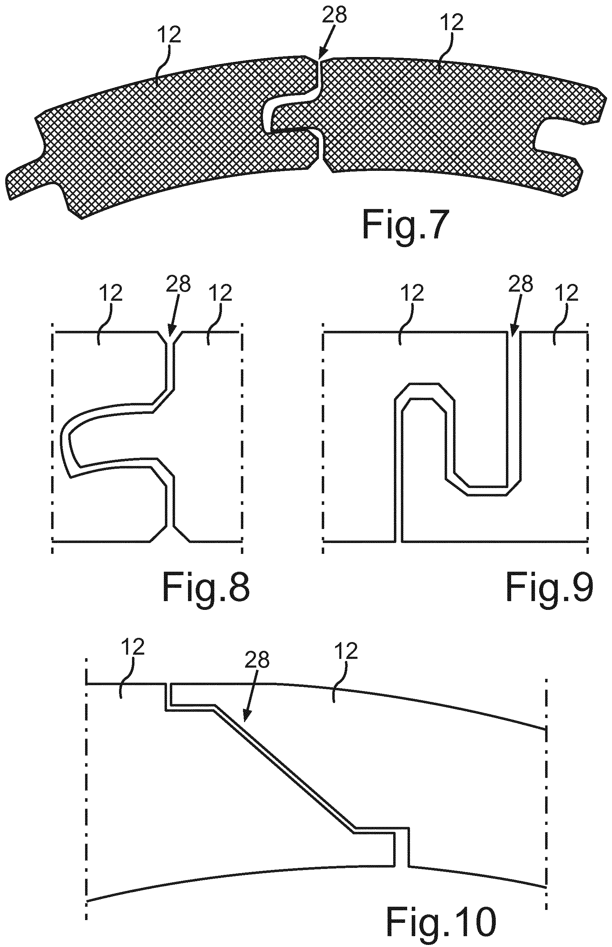

Das Isolationselement 12 besteht grundsätzlich zumindest aus einem Festkörper 24, der mit einer metallischen Hülle 26 versehen ist. Der Festkörper 24 besteht seinerseits zumindest teilweise aus einem keramischen Material. Zur Herstellung des Isolationselements 12 existieren verschiedene Möglichkeiten. In den Fig. 2 bis 5 wird zunächst ein sequentieller Aufbau des Isolationselements 12 näher illustriert. Fig. 2 zeigt hierzu eine schematische seitliche Schnittansicht eines Festkörpers 24 zu Beginn seiner Herstellung. Der Festkörper 24 wird im gezeigten Ausführungsbeispiel aus Keramikkugeln 25 hergestellt, die in der gewünschten geometrischen Form gestapelt werden. Fig. 3 zeigt eine schematische seitliche Schnittansicht des fertigen Festkörpers 24 des Isolationselements 12. Die Keramikkugeln 25 können während und/oder nach der Fertigstellung des Festkörpers 24 beispielsweise durch einen Sintervorgang fest miteinander verbunden werden. Alternativ oder zusätzlich kann der Festkörper 24 auch Keramikschaum enthalten bzw. aus Keramikschaum bestehen. Anschließend wird der keramische Festkörper 24 per generativem Verfahren, beispielsweise durch Pulverauftragsschweißen, Schmelzschichtung (fused deposition modelling) oder dergleichen mit der metallischen Hülle 26 umschlossen, die sämtliche Funktionsflächen, beispielsweise Anlageflächen, die bereits erwähnten Montageflächen 18, Segmentstoßbereiche 28 (vgl. Fig. 7) bereitstellt und den keramischen Festkörper 24 dicht umschließt. Fig. 4 zeigt hierzu eine schematische seitliche Schnittansicht des Festkörpers 24 während seiner Umhüllung mit der metallischen Hülle 26. In Fig. 5 ist schließlich eine schematische seitliche Schnittansicht des fertigen Isolationselements 12 abgebildet. Alternativ besteht die Möglichkeit, den schon in Form gebrachten keramischen Festkörper 24 mit dem metallischen Material zu beschichten, beispielsweise durch thermisches Spritzen, um so die metallische Hülle 26 zu erzeugen.

Eine weitere alternative Möglichkeit zur Herstellung des Isolationselements 12 ist in Fig. 6 skizziert. Hierbei wird zunächst ein Teil der metallischen Hülle 26 hergestellt, die anschließend mit keramischem Material, beispielsweise mit "losen" Keramikkugeln 25 befüllt wird. Alternativ oder zusätzlich zu Keramikkugeln 25, die anschließend beispielsweise miteinander verklebt werden, kann der Festkörper 24 auch aus Keramikschaum und/oder aus einem versinterten keramischen Pulver hergestellt werden. Alternativ oder zusätzlich können die Keramikkugeln 25 beispielsweise durch keramisches Nano-Keramik-Pulver mit reduzierter Sintertemperatur (ca. 800°C) zum Festkörper 24 versintert werden. Als weitere Alternative bietet sich als Bindematerial eine metallorganische Verbindung (Lack) an, bei der der organische Rest ausgebrannt wird und über das Metall eine Verbindung zwischen den Keramikkugeln 25 erzielt wird. Abschließend wird der Festkörper 24 vollständig mit der metallischen Hülle 26 umhüllt, wodurch das Isolationselement 12 erhalten wird.

Durch den zumindest teilweisen generativen Aufbau wird gegenüber einer konventionellen Bauweise grundsätzlich eine höhere Gestaltungsfreiheit insbesondere im Hinblick auf unterschiedlich ausgebildete Segmentstoßbereiche 28 zwischen aneinander anliegenden Isolationselementen 12 erzielt. Fig. 7 zeigt hierzu eine schematische seitliche Schnittansicht von zwei segmentförmigen Isolationselementen 12. Die Isolationselemente 12 sind dabei korrespondierend zueinander ausgebildet, so dass mehrere Isolationselemente 12 ringförmig im Gehäuse 10 angeordnet werden können. Man erkennt weiterhin, dass die Isolationselemente 12 im Bereich ihrer Segmentstoßbereiche 28 überlappende Stoßflächen aufweisen, wodurch eine hohe Gasdichtigkeit sowie eine mechanische stabile Anbindung erzielt werden.

In Fig. 8 bis 10 sind schematische seitliche Schnittansichten aneinander anliegender Segmentstoßbereiche zweier Isolationselemente 12 gezeigt. Man erkennt, dass eine Vielzahl unterschiedlicher geometrischer Ausgestaltungen der Segmentstoßbereiche 28 möglich ist, so dass das Isolationselement 12 optimal an seinen jeweiligen Einsatzzweck angepasst werden kann.

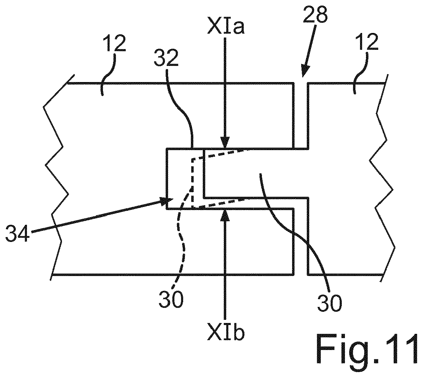

Fig. 11 zeigt eine schematische seitliche Schnittansicht eines sich reversibel verformenden Dichtelements 30. Das Dichtelement 30 wird stellvertretend für alle Strukturen im Segmentstoßbereich 28 benachbarter Isolationselemente 12 diskutiert werden, die sich so verformen können, dass sie im Betrieb eines zugeordneten Flugtriebwerks an den Wänden 32 einer zugeordneten Aufnahme 34 des benachbarten Isolationselements 12 anliegen. Das Dichtelement 30 kann hierzu beispielsweise eine Art Bimetalleffekt zeigen und gemäß Pfeil XIa im Ruhezustand nur an der oberen Wand 32 der Aufnahme 34 des benachbarten Isolationselements 12 anliegen. Während des Betriebs eines zugeordneten Flugtriebwerks, das heißt bei einer starken Temperaturerhöhung, verformt sich das Dichtelement 30 einseitig, so dass es gemäß Pfeil XIb sowohl an der oberen als auch an der unteren Wand 32 der Aufnahme 34 des benachbarten Isolationselements 12 anliegt. Dieser Betriebszustand ist gestrichelt angedeutet. Neben einer besonders guten Isolationswirkung wird dadurch auch eine besonders hohe Dichtigkeit im Segmentstoßbereich zwischen den benachbarten Isolationselementen 12 erzielt. Bei einer anschließenden Abkühlung, das heißt beispielsweise bei abgestelltem Flugtriebwerk, verformt sich das Dichtelement 30 wieder reversibel in seinen Ruhezustand zurück. Dieser Bimetalleffekt kann beispielsweise durch eine thermisch unsymmetrische Formgebung des Dichtelements 30, also durch eine Ausgestaltung mit sich unterschiedlich schnell bzw. stark erwärmenden Bereichen, durch die Verwendung eines Bimetalls, das heißt einer zumindest bereichsweise aus unterschiedlichen Metallen bzw. Metalllagen bestehenden Hülle 26, und/oder durch einen gradierten Werkstoff erzielt werden. Grundsätzlich eignen sich für die beschriebene Funktionalität alle Bauteile bzw. Bauteilelemente mit auxetischen Strukturen, das heißt mit sich thermisch einseitig verformenden Strukturen.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlem, Einwaagefehlem, DIN-Toleranzen und dergleichen - als vom Rahmen der Erfindung mitumfasst anzusehen.

## Patentansprüche

1. Isolationselement (12), welches radial oberhalb wenigstens einer Leitschaufel (14) in einem Gehäuse (10) einer thermischen Gasturbine anordenbar ist,
wobei das Isolationselement (12) aus einem mit einer metallischen Hülle versehenen Festkörper (24) besteht,
und wobei der Festkörper (24) zumindest teilweise aus einem keramischen Material besteht, so dass der Festkörper (24) bei Temperaturschwankungen keine bzw. nur eine sehr geringe Volumenänderung von maximal ±10 % erfährt,
**dadurch gekennzeichnet, dass** dieses wenigstens ein Dichtelement (30) zur Anordnung in einer korrespondierenden Aufnahme (34) eines benachbarten Isolationselements (12) umfasst, wobei das Dichtelement (30) derart ausgebildet ist, dass es sich bei thermischer Belastung reversibel und/oder anisotrop verformt.

2. Isolationselement (12) nach Anspruch 1,
**dadurch gekennzeichnet, dass**
dieses segmentförmig ausgebildet ist.

3. Isolationselement (12) nach Anspruch 2,
**dadurch gekennzeichnet, dass**
dieses ringsegmentförmig ausgebildet ist.

4. Isolationselement (12) nach Anspruch 2 oder 3,
**dadurch gekennzeichnet, dass**
dieses einander gegenüberliegende und komplementär ausgebildete Segmentstoßbereiche (28) zur ringförmigen Anordnung weiterer Isolationselemente (12) aufweist.

5. Flugtriebwerk mit einem Gehäuse (10) in welchem wenigstens ein Isolationselement (12) radial oberhalb wenigstens einer Leitschaufel (14) angeordnet ist,
**dadurch gekennzeichnet, dass**
das Isolationselement (12) gemäß einem der Ansprüche 1 bis 4 ausgebildet ist.

6. Flugtriebwerk nach Anspruch 5,
**dadurch gekennzeichnet, dass**
das Gehäuse (10) ein Niederdruckturbinengehäuse ist.

7. Flugtriebwerk nach Anspruch 5 oder 6,
**dadurch gekennzeichnet, dass**
dieses mehrere segmentierte Isolationselemente (12) umfasst, die bezüglich einer Rotorachse des Flugtriebwerks ringförmig im Gehäuse (10) gehalten sind.

8. Flugtriebwerk nach Anspruch 7,
**dadurch gekennzeichnet, dass**
- die Isolationselemente (12) miteinander korrespondierende Segmentstoßbereiche (28) aufweisen, wobei jeder Segmentstoßbereich (28) zumindest bereichsweise mit dem jeweils angrenzenden Segmentstoßbereich (28) des benachbarten Isolationselements (12) überlappt; und/oder dass
- die Isolationselemente (12) jeweils zwei einander gegenüberliegende Segmentstoßbereiche (28) aufweisen, von denen jeweils ein Segmentstoßbereich (28) ein Dichtelement (30) aufweist, das sich in eine Aufnahme (34) des benachbarten Isolationselements (12) erstreckt und sich zumindest während des Betriebs des Flugtriebwerks derart verformt, dass ein Gasdurchtritt zwischen benachbarten Segmentstoßbereichen (28) zumindest verringert wird.

## Claims

1. Insulation element (12) which can be arranged radially above at least one guide vane (14) in a housing (10) of a thermal gas turbine,
the insulation element (12) consisting of a solid body (24) provided with a metal shell,
and the solid body (24) consisting at least in part of a ceramic material such that, during temperature fluctuations, the solid body (24) undergoes no change in volume, or only a very minor change in volume up to a maximum of ±10%,
**characterized in that** said insulation element comprises at least one sealing element (30) to be arranged in a corresponding receiving portion (34) of an adjacent insulation element (12), the sealing element (30) being designed in such a way that it deforms in a reversible and/or anisotropic manner when under thermal stress.

2. Insulation element (12) according to claim 1,
**characterized in that**
said element is formed in segments.

3. Insulation element (12) according to claim 2,
**characterized in that**
said element is formed in annular segments.

4. Insulation element (12) according to either claim 2 or claim 3,
**characterized in that**
said element has segment abutment regions (28) arranged opposite one another in a complementary manner in order to form an annular arrangement of further insulation elements (12).

5. Aircraft engine comprising a housing (10) in which at least one insulation element (12) is arranged radially above a guide vane (14),
**characterized in that**
the insulation element (12) is designed according to any of claims 1 to 4.

6. Aircraft engine according to claim 5,
**characterized in that**
the housing (10) is a low-pressure turbine housing.

7. Aircraft engine according to either claim 5 or claim 6,
**characterized in that**
said engine comprises a plurality of segmented insulation elements (12) that are mounted in the housing (10) annularly with respect to a rotor axis of the aircraft engine.

8. Aircraft engine according to claim 7,
**characterized in that**
- the insulation elements (12) have segment abutment regions (28) that correspond to one another, each segment abutment region (28) overlapping at least in regions with the relevant adjoining segment abutment region (28) of the adjacent insulation element (12); and/or in that
- the insulation elements (12) each have two opposing segment abutment regions (28), of which one segment abutment region (28) has a sealing element (30) that extends into a receiving portion (34) of the adjacent insulation element (12) and deforms, at least during operation of the aircraft engine, in such a way that the amount of gas passing between adjacent segment abutment regions (28) is at least reduced.

## Revendications

1. Élément d'isolation (12) qui peut être disposé radialement au-dessus d'au moins une aube directrice (14) dans un carter (10) d'une turbine à gaz thermique,
l'élément d'isolation (12) étant constitué d'un corps solide (24) pourvu d'un manchon métallique, et le corps solide (24) étant constitué au moins partiellement d'un matériau céramique de sorte que le corps solide (24) ne subisse pas ou ne subisse que très peu de variations de volume de ± 10 % en cas de fluctuations de température,
**caractérisé en ce que** cet élément d'isolation comporte au moins un élément d'étanchéité (30) destiné à être disposé dans un logement correspondant (34) d'un élément d'isolation (12) adjacent, l'élément d'étanchéité (30) étant conçu de façon à se déformer de manière réversible et/ou anisotrope lors de l'exposition à la chaleur.

2. Élément d'isolation (12) selon la revendication 1,
**caractérisé en ce que**
il est conçu sous forme de segments.

3. Élément d'isolation (12) selon la revendication 2,
**caractérisé en ce que**
il est conçu sous forme de segments annulaires.

4. Élément d'isolation (12) selon la revendication 2 ou 3,
**caractérisé en ce que**
il comporte des zones de jonction de segments (28) opposées et complémentaires en vue de l'agencement annulaire d'autres éléments d'isolation (12).

5. Moteur d'aéronef comprenant un carter (10) dans lequel au moins un élément d'isolation (12) est disposé radialement au-dessus d'au moins une aube de guidage (14),
**caractérisé en ce que**
l'élément d'isolation (12) est formé selon l'une des revendications 1 à 4.

6. Moteur d'aéronef selon la revendication 5,
**caractérisé en ce que**
le carter (10) est un carter de turbine à basse pression.

7. Moteur d'aéronef selon la revendication 5 ou 6,
**caractérisé en ce que**
il comprend une pluralité d'éléments d'isolation segmentés (12) qui sont maintenus annulairement dans le carter (10) par rapport à un axe de rotor du moteur d'aéronef.

8. Moteur d'aéronef selon la revendication 7, **caractérisé en ce que**
- les éléments d'isolation (12) comportent des zones de jonction de segments (28) correspondant entre elles, chaque zone de jonction de segments (28) chevauchant au moins partiellement la zone de jonction de segments (28) adjacente respective de l'élément d'isolation (12) adjacent ; et/ou **en ce que**
- les éléments d'isolation (12) comportent chacun deux zones de jonction de segments (28) opposées entre elles, parmi lesquelles une zone de jonction de segments respective (28) comporte un élément d'étanchéité (30) qui s'étend jusque dans un logement (34) de l'élément d'isolation (12) adjacent et qui se déforme au moins pendant le fonctionnement du moteur d'aéronef de sorte qu'un passage de gaz entre des zones de jonction de segments (28) adjacentes est au moins réduite.
